# EUROPEAN PATENT APPLICATION

(11) **EP 1 152 575 A1**
(43) Date of publication of application: **07.11.2001**
(21) Application number: 00310071.6
(22) Date of filing: 13.11.2000
(51) Int. Cl.: H04L 12/64

(54) **Apparatus and method for improving the efficiency of wireless communications**

(30) Priority: 01.05.2000 US 562395
(71) Applicant: LUCENT TECHNOLOGIES INC., Murray Hill, New Jersey 07974-0636 (US)
(72) Inventor: Bujewski, Theodore Joseph, East Seattle, Washington 98102 (US); Lee, Anne Yin-Fee, Naperville, Illinois 60563 (US); Payne, Stephen Ewell, Vienna, Virginia (US); Thompson, Robin J., Batavia, Illinois 60510 (US)
(74) Representative: Watts, Christopher Malcolm Kelway, Dr.

(57) **Abstract**

The present invention detects idle time durations of communications in the forward direction, reverse direction, or both directions of a wireless call in which discontinuous transmission is invoked. Such events are exploited to reduce associated data transmission on terrestrial facilities that are utilized by a wireless communications system, thus lowering transmission costs. An exemplary embodiment includes bases stations and a mobile switching center that is connected to an asynchronous transfer mode (ATM) network for backhaul transmission.

## Description

### Field of the Invention

This invention relates to the field of packet transmission over terrestrial facilities in a wireless communications system.

### Background of the Invention

In many markets, a customer is able to select wireless service from one of a number of service providers. The selection process is usually contingent upon the price offered to the customer. In order for the service provider to have attractive prices, the service provider must keep operational costs as low as possible. A significant portion of the service provider's operational costs is attributable to terrestrial transmission facilities. Terrestrial facilities transport telephones communications between the base stations and the mobile switching center (MSC) of the wireless communications system. Telephone communications convey information associated with a plurality of calls, each call between a mobile subscriber unit and a far-end telephone party through a serving base station. The far-end telephone party can be another mobile subscriber unit or a telephone instrument connected to a public switched telephone network (PSTN).

A common transmission configuration consists of base station trunks (e.g. DS1's) bundled (groomed) into backhaul facilities (e.g. a DS3 facility) which have sufficient transmission bandwidth to support a plurality of base stations. As an example, DS1 facilities, each able to support 24 DS0s or 1.536 Mbps, are bundled into a DS3 facility, which can support 28 DS1's. If each base station has one DS1 trunk terminating on it, then trunk facilities from 28 base stations can be groomed into the DS3 facility. If necessary, more than one DS1 can be assigned to a base station.

If the required transmission rate for a base station is greater than the capacity of one DS1, the service provider must lease or purchase more facilities. For example, if a base station requires a transmission bandwidth of 25 DS0's to support the anticipated call volume, 2 DS1 (48 DS0's) facilities must be leased or purchased, even though the majority of the transmission bandwidth of the second DS1 facility is not utilized. If the transmission bandwidth for that base station is reduced by an equivalent of 1 DS0, the service provider saves the cost associated with 1 DS1 facility.

Grooming of DS1's/DS0's is typically accomplished by a digital access crossconnect system (DACS). A cost advantage is achieved by such grooming because backhaul facilities are leased or sold for an amount that is not linearly proportional to the transmission bandwidth. For example, even though a DS3 facility has a transmission bandwidth of 28 DS1 facilities, DS3 facilities can be leased for a cost equivalent to approximately 15 DS1 facilities.

Other possible terrestrial transmission facility configurations include synchronous optical networks (SONET) and asynchronous transfer mode (ATM) networks. The service provider can choose the type of backhaul facilities depending upon the required transmission bandwidth and the backhaul facilities that are available near the wireless communications system.

Reducing the cost of both parts of terrestrial transmission facilities (dedicated point-to point base station trunks and backhaul facilities) is inter-related; lowering the cost of one translates to a lower cost for the other component. However, there may be several differences between the characteristics of each component that need consideration. The dedicated point-to-point base station trunks, e.g. DS1 facilities (T1 trunks), are generally symmetrical. The transmission rate in one direction (from MSC to base station) is the same as the transmission rate in the other direction (from base station to MSC). Also, dedicated point-to-point base station trunks are typically circuit-switched facilities, and consequently utilize a fixed transmission rate. As an example, a DS1 facility has a transmission rate of 1.536 Mbps whether or not information bits are transported over the facilities or not. When there are no information bits, filler bits ("filler flags") are inserted in the bit stream in order to maintain a constant transmission rate.

In contrast, backhaul facilities may or may not be symmetrical. For example, if the backhaul facilities are DS1 facilities, the transmission rates will be the same in both directions. On the other hand, an ATM network backhaul facility can be configured to support asymmetric transmission rates. If transmission facilities have symmetric transmission characteristics, the transmission rate in both directions must be reduced in order to reduce transmission costs. This fact is generally applicable to dedicated point-to-point base station trunks. If the backhaul facilities are supported by an ATM network, reducing the transmission rate only in one direction may translate to lower facility costs.

In determining the required transmission rates of the terrestrial facilities, one needs to consider the actual transmission rates of the air interface on the uplink (mobile subscriber unit to base station) and downlink (from base station to mobile subscriber unit). Terrestrial facilities carry communications from the far-end telephone party to the base station for transmission to the mobile subscriber unit over the downlink. Similarly, terrestrial facilities carry communications from the base station to the far-end telephone party corresponding to radio transmission from the mobile subscriber unit over the uplink link.

Various standards documents for wireless communications (such as Electronics Industry Association/Telecommunications Industry Association (EIA/TIA) 553, TIA IS-54, Group Special Mobile and TIA IS-136) support discontinuous transmission (DTX) on the uplink (reverse direction) radio channel. Because speech waveforms typically contain idle time (pauses in speaking), radio communications does not need to provide corresponding information on a continuous basis (an idle bit stream). The mobile subscriber unit's transmitter need not be active during these time durations, thus reducing the power drain from the mobile subscriber unit's battery. Because a significant portion of typical speech contains idle (silent) periods, DTX operation reduces interference on the uplink radio channels associated with other calls.

In a given plurality of calls, each call independently utilizes DTX operation. Terrestrial facilities that carry an aggregate of corresponding communications have a reduced transmission bandwidth because DTX operation reduces the required bandwidth on the associated radio channels. The reduction of transmission bandwidth is applicable both to dedicated point-to-point base station trunks and to backhaul facilities. The extent of bandwidth reduction is more pronounced with backhaul facilities because they typically carry the communications of more calls than do dedicated point-to-point base station trunks. If the service provider can reduce the costs of terrestrial facilities, the total costs of operating a wireless communications system can be reduced. Reducing costs enable the service provider to offer more competitive prices to mobile subscribers.

### Summary of the Invention

The present invention detects idle time durations of communications in the forward direction, reverse direction, and both directions of a wireless call. Such events are exploited to reduce associated data transmission rates on terrestrial facilities that are utilized by a wireless communications system supporting at least one wireless call, thus lowering transmission costs.

An exemplary embodiment includes at least one base station and a mobile switching center connected by an asynchronous transfer mode (ATM) network for backhaul transmission. In the exemplary embodiment, terrestrial facilities include DS1 facilities (e.g. trunks connecting to a base station) that interface to the ATM network. The ATM network can support calls having asymmetric traffic patterns and thus can be configured for asymmetric aggregate data rates. Thus, costs associated with the ATM network can be decreased by reducing data transmission rates in either the forward or reverse directions. In the present invention, discontinuous transmission (DTX) is invoked in either direction to reduce data transmission rates.

The present invention provides an apparatus and method comprising a transcoder detecting that a far-end telephone party is idle, a first edge switch inhibits generation of forward data packets to the ATM network, thus reducing the number of forward data packets to the ATM network. The present invention further comprises a transcoder sending a message that instructs a mobile subscriber unit to generate "comfort noise", the first edge switch converting the message into a forward data packet, and a second edge switch reconverting the forward data packet into the message through a base station instructing the mobile subscriber unit to generate comfort noise. Moreover, the present invention may further comprise the base station detecting that the mobile subscriber unit is idle and the second edge switch inhibiting reverse data packets to the ATM network, whereby a number of reverse data packets to the ATM networks is reduced. Comfort noise may be generated for the far-end telephone party in a similar manner as for the mobile subscriber unit.

### Brief Description of the Drawings

A more complete understanding of the invention may be obtained from consideration of the following description taken in conjunction with the drawings, in which:
FIG. 1 is a block diagram of an architecture of a wireless communications system supporting an exemplary embodiment of the present invention;
FIG. 2 illustrates a message flow in the reverse direction (mobile subscriber unit to MSC) according to an exemplary embodiment of the invention;
FIG. 3 illustrates a message flow in the forward direction (MSC to mobile subscriber unit) according to an exemplary embodiment of the invention;
FIG. 4 illustrates the generation of ATM cells from HDLC frames using an ATM adaptation layer type 5 (AAL5) according to an exemplary embodiment of the invention; and
FIG. 5 illustrates the generation of ATM cells from HDLC frames using an ATM adaptation layer type 2 (AAL2) according to a variation of an exemplary embodiment of the invention.

### Detailed Description

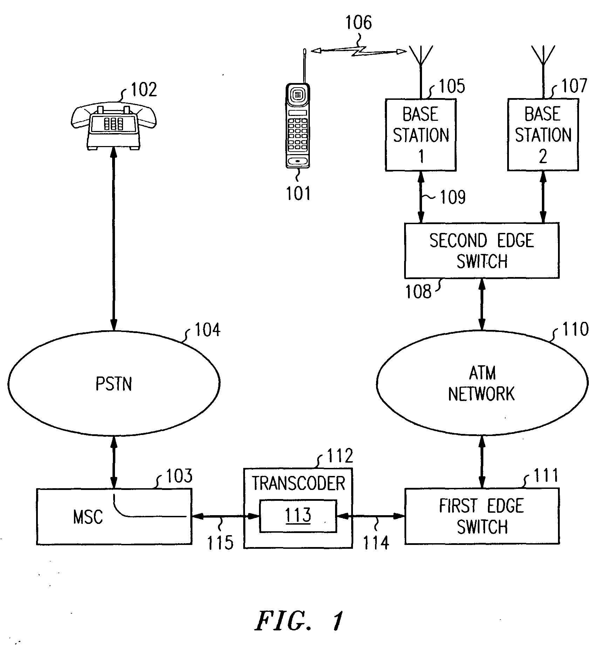

FIG. 1 illustrates an architecture of a wireless communications system supporting an exemplary embodiment of the present invention. The wireless communications system serves a plurality of mobile subscriber units, one of which is identified as mobile subscriber unit 101. In FIG. 1 mobile subscriber unit 101 is connected to far-end party 102 through mobile switching center (MSC) 103 and public switching telephone network (PSTN) 104 thus establishing a call. The wireless communications system can also serve mobile-to-mobile calls in which another mobile subscriber unit is far-end telephone party 102. For purposes of describing the present invention, a mobile-to-mobile call operates in a consistent manner as a call between subscriber unit 101 and far-end telephone party 102 through PSTN 104. Even though MSC 103 is shown as a single entity, MSC 103 may be a distributed system situated over a wide geographic region. MSC 103 may have one or more of switching units serving one or a plurality of cities, towns, and rural areas.

For the call between mobile subscriber unit 101 and far-end telephone party 102, communications is established between mobile subscriber unit 101 and base station 105 over radio channel 106. Radio channel 106 comprises a reverse radio link (mobile subscriber unit 101 to base station 105) and a forward radio link (base station 105 to mobile subscriber unit 101). Base station 105 continues the call path by connecting to second edge switch 108 through terrestrial facility 109. In the exemplary embodiment, terrestrial facility 109 comprises at least one T1 trunk, wherein each T1 trunk has a 1.536 Mbps transmission rate in the forward direction (second edge switch 108 to base station 105) and the reverse direction (base station 105 to second edge switch 108).

Even though mobile subscriber unit 101 is initially served by base station 105, mobile subscriber unit 101 subsequently can be served by another base station such as base station 107 because mobile subscriber unit 101 changes location. The corresponding call event is known as a "handoff" or a "handover." Base stations 105 and 107 can be associated with the same MSC (e.g. MSC 103) or can be associated with different MSC's. A transmission path between base station 107 and an MSC (such as MSC 103) is established corresponding to the transmission path that was described between base station 105 and MSC 103.

Terrestrial facility 109 may be further partitioned into "packet pipes" such as disclosed in U.S Patent 5,195,090, issued to B. D. Bolliger et al. on March 16, 1993. In the exemplary embodiment, a T1 trunk has 24 DS0's that can be divided into at least one "packet pipe," each "packet pipe" comprising one or more DS0's. A "packet pipe" is applicable to an E1 trunk, which has 32 DS0's. A "packet pipe" is mapped to one or more radio ports at base station 105.

In the exemplary embodiment, terrestrial facility 109 utilizes high-level link control (HDLC), which is a bit-oriented protocol, for communicating on each "packet pipe." HDLC is well known to one skilled in the art and is referenced in Stallings, William, Data and Computer Communications, Macmillan Publishing Company, 1988, pp. 147-152.

The transmission rate of terrestrial facility 109 is constant and must be maintained at the fixed value regardless of whether information needs to be transported. The transmission rate is maintained by injecting "filler flags" (specified by HDLC as "01111110") into the bit stream whenever the number of available information octets (eight bits or a byte) is insufficient to match the transmission rate in either the forward direction or the reverse direction. "Filler flags" correspond to an octet bit pattern with HDLC. For facilitating the reception of bits on the T1 trunk, it may be necessary to invert the bits so that the "filler flags" are inverted (e.g. "10000001" for an inverted HDLC flag).

Second edge switch 108 interfaces to asynchronous transfer mode (ATM) network 110 according to this exemplary embodiment of this invention. Variations of the exemplary embodiment can utilize asynchronous networks other than an ATM network. Other alternatives are an asynchronous network supporting a TCP/IP protocol on an Ethernet local area network (LAN) and point-to-point protocol (PPP) on DS1 facilities. Such alternatives are known to one skilled in the art. ATM network 110 transports ATM cells, each ATM cell comprising a total of 53 octets which includes 48 octets of information. An ATM cell has a constant length and if less than 48 octets of information need to be transported on a timely basis, the remaining 48 octets can be padded with unused octets.

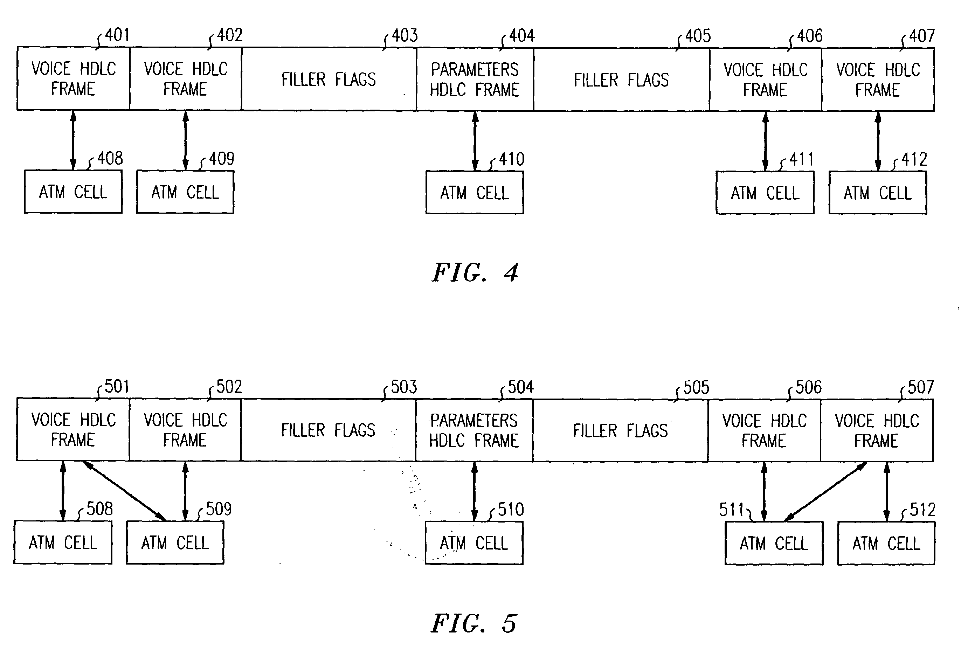

Second edge switch 108 converts HDLC frames into outgoing ATM cells and reconverts incoming ATM cells into HDLC frames. The mapping between ATM cells and HDLC frames is discussed below in relation to FIGs. 4 and 5.

ATM network 110, which can support a large geographical area, delivers ATM cells between second edge switch 108 to first edge switch 111 in both the forward direction and the reverse direction. ATM network 110 provides message delivery that is cost competitive to that offered by dedicated point-to-point facilities because a plurality of users share the ATM resources.

First edge switch 111 reconverts incoming ATM cells from second edge switch 108 into HDLC frames, which are sent to transcoder 112 over terrestrial facility 114. In the exemplary embodiment, terrestrial facility 114 is the same type of facility as terrestrial 109 and thus comprises at least one T1 trunk. Terrestrial facility 114 is further partitioned into "packet pipes" and utilize the HDLC protocol. Because the transmission rate of terrestrial facility 114 is constant, first edge switch injects "filler flags" if information octets (contained in incoming ATM cells) are not available on a timely basis.

In the exemplary embodiment, terrestrial facility 115 supports transmission with a pulse code modulation (PCM) format on a DS0. A T1 trunk can support as many as 24 DSO's. Moreover, first edge switch 111, transcoder 112, and MSC 103 may be essentially co-located (e.g. in the same building structure). In such cases, terrestrial facilities 114 and 115 may be internal transmission links within the building structure.

Transcoder 112 comprises at least one speech processing unit supporting a number of functions, including speech coding (a vocoder as used in the art). In FIG. 1, speech processing unit 113 is assigned to a call between mobile subscriber unit 101 and far-end telephone party 102. Transcoder 112 is physically located at MSC 103 or at a separate entity; in either case, however, the logical functionality of transcoder 112 remains the same.

The call may be assigned to speech processing unit 113 for the entire time duration of the call or may be reassigned to another speech processing unit that is situated in another transcoder. Speech processing unit 113 supports several functions. First, speech processing unit 113 converts HDLC frames that are received from first edge switch 111 into a waveform that can be sent to far-end telephone party 102 through MSC 103 and a telephone switching network such as public telephone switching network (PSTN) 104. With PSTN 104 the waveform typically has a pulse code modulation (PCM) format. However, if far-end telephone party 102 is another mobile subscriber unit (configured as a mobile-to-mobile call), the corresponding waveform can assume a format that is amenable for direct processing by the far-end telephone party's speech processing circuitry. The associated configuration is commonly identified as "vocoder bypass" in the art. The second function of speech processing unit 113 is to convert the signals received from far-end telephone party 102 into HDLC frames, which are then presented to first edge switch 111. The third function of speech processing unit 113 is to detect the time durations in which far-end telephone party 102 is not transmitting a speech signal, i.e. an idle (silent) time interval. Speech processing unit 113 injects "filler flags" during such time durations in order to maintain a constant transmission rate for terrestrial facility 114.

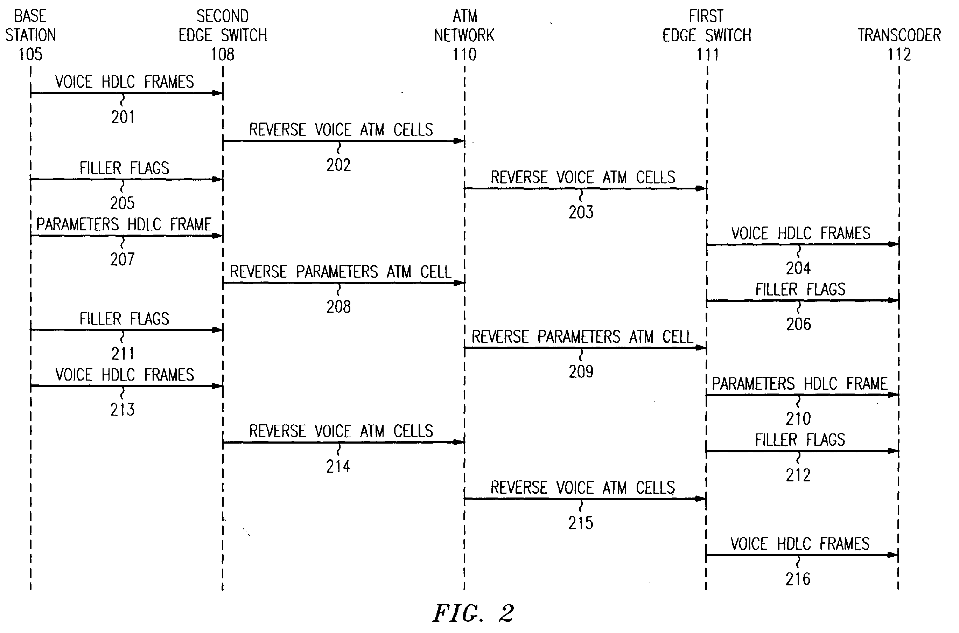

In the detailed discussions of FIGs. 2, 3, 4, and 5, only one call is described. However, as is appreciated by one skilled in the art, a plurality of calls can be multiplexed on the associated "packet pipes" (that are configured on terrestrial facilities 109 and 114) and ATM network 110. Thus, with a plurality of calls, the messages corresponding to each call are multiplexed on the "packet pipes" and ATM network 110.

FIG. 2 illustrates a message flow in the reverse direction (base station 105 to transcoder 112) according to the exemplary embodiment of the invention. Base station 105 sends voice HDLC frames 201 to second edge switch 108 in response to receiving messaging from mobile subscriber unit 101 over radio channel 106. Second edge switch 108 converts voice HDLC frames 201 into reverse voice ATM cells 202 that are transported as reverse voice ATM cells 203 over ATM network 110 to first edge switch 111. First edge switch 111 reconverts reverse voice ATM cells 203 into voice HDLC frames 204.

Because terrestrial facilities 109 and 114 have a fixed transmission rate, "filler flags" must be inserted between voice HDLC frames 201 and 204 in order to maintain the transmission rate. These "filler flags" are not converted into ATM cells by second edge switch 108 and first edge switch 111. The technique of reducing the number of ATM cells in this way is termed as "HDLC pass through" and is applicable to several possible conditions. Terrestrial facilities 109 and 114 may be associated with a plurality of radio ports, with each radio port assigned to a call. However, some of the radio ports may be idle at a given instance of time because the number of requested calls may be less than the call capacity of the wireless communications system. In such cases, terrestrial facilities 109 and 114 are not transporting information bits at the fixed transmission rate, and thus "filler flags" are injected. First edge switch 111 and second edge switch 108 do not translate these "filler flags" into ATM cells. Another condition that utilizes "HDLC pass through" corresponds to time instances in which discontinuous transmission (DTX) occurs in the forward direction, reverse direction, or both directions. DTX operation is discussed in greater detail below.

Whenever mobile subscriber unit 101 is not sending a voice signal over radio link 106, base station 105 sends filler flags 205 to second edge switch 108. This is the case when mobile subscriber unit 101 is in the DTX state. Second edge switch 108 inhibits the generation of voice HDLC frames, and thus corresponding ATM cells are not transported through ATM network 110. However, first edge switch 111 inserts filler flags 206 in order to maintain the constant transmission rate of terrestrial facility 114 whenever there are no ATM cells to process.

When mobile subscriber unit 101 is in the DTX state, "comfort noise," which has the characteristics of acceptable background noise, may be generated at far-end telephone party 102. Telecommunications Industry Association (TIA) IS-136 Rev B (TDMA Cellular/PCS - Radio Interface - Mobile Station - Base Station Compatibility - Digital Control Channel) prescribes this option by having mobile subscriber unit 101 send comfort noise parameters and channel quality measurements to base station 105 over radio channel 106. Base station 105 send the comfort noise parameters in parameters HDLC frame 207. Parameters HDLC frame 207 is converted to reverse parameters ATM cell 208 by second edge switch 108, sent through ATM network 110 to first edge switch 111 as reverse parameters ATM cell 209, converted to parameters HDLC frame 210 by first edge switch 111, and sent to transcoder 112. Assigned speech processing unit 113 utilizes the comfort noise parameters that are contained in parameters HDLC frame 210 to generate "comfort noise" for far-end telephone party 102. Mobile subscriber unit 101 may update the comfort noise parameters on a periodic time basis (e.g. every second) and consequently message flow 207, 208, 209, and 210 may be repeated. While mobile subscriber unit 101 remains in the DTX state, filler flags 211 and 212 are injected over terrestrial facilities 109 and 114 whenever parameters HDLC frames are not sent (i.e. comfort noise parameters are not updated). When mobile subscriber unit 101 transitions from the DTX state (i.e. the transmitter becomes activated), generation of voice HDLC frames 213 resume. Voice-associated information is delivered to transcoder 112 by message flow 213, 214, 215, and 215 analogous to message flow 201, 202, 203, and 204.

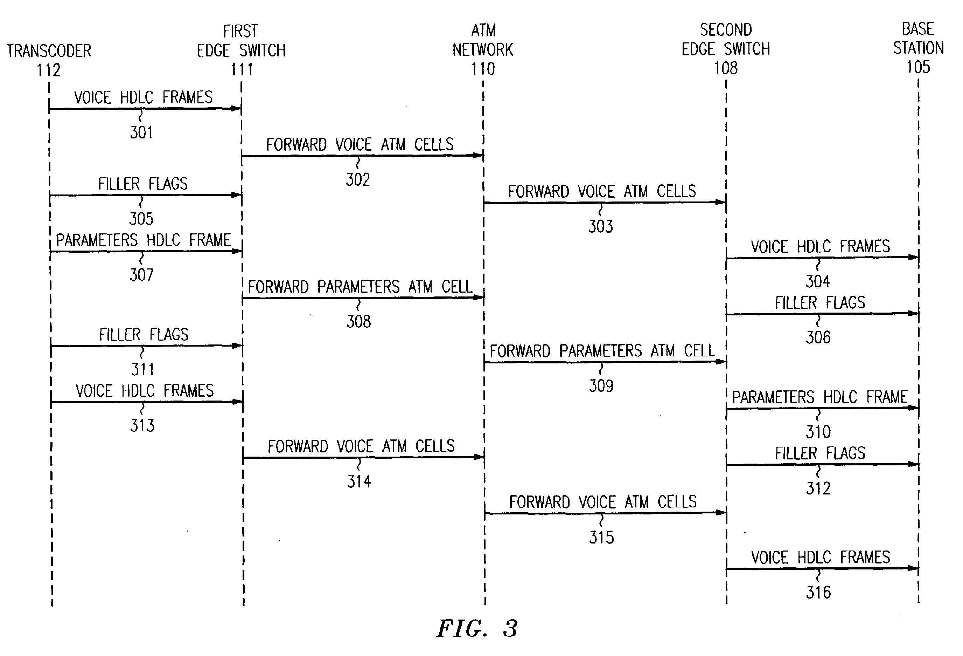

FIG. 3 illustrates messaging in the forward direction (MSC 103 to mobile subscriber 101). FIG. 3 is similar to FIG. 2 except that the messages are flowing in the opposite direction to FIG. 2. DTX operation on the forward link of radio channel 106 is not standardized at this point of time. We propose that message flow 301, 302, 303, and 304 corresponds to message flow 201, 202, 203, and 204; message flow 305 and 306 corresponds to message flow 205 and 206; message flow 307, 308, 309, and 310 corresponds to message flow 207, 208, 209, and 210; message flow 311 and 312 corresponds to message flow 211 and 212; and message flow 313, 314, 315, and 316 corresponds to message flow 213, 214, 215, and 216.

Because a "packet pipe" can support a plurality of calls, the discussion regarding DTX operation heretofore is applicable to a plurality of calls. However, because a plurality of mobile subscriber units and a plurality of far-end telephone units can operate independently of each other, DTX operation associated with one of the plurality of calls is independent of the DTX operation of another call. In other words, DTX operation of a first call may be invoked while DTX operation for a second call may not be invoked at a given time.

Because filler flags are not transported through the ATM network, the capacity of the ATM network is effectively increased. Thus, more "real" (HDLC frames) traffic may be transported by the ATM network than in the prior art. The concept of not sending "silence" is employed by several standards for wireless telephones in order to prolong battery life. However, applying a technique of not forwarding filler flags in both directions through the terrestrial facilities in order to increase the capacity of facilities is an advancement over the art.

DTX operation is also applicable to a circuit mode data call whenever data is sent in a sporadic manner, i.e. there are breaks or pauses in data transmission. However, the vocoder function of speech processing unit 113 is bypassed if the DTX state is invoked in the reverse direction and the vocoder function of mobile subscriber unit 101 is bypassed if the DTX state is invoked in the forward direction.

FIG. 4 illustrates generation of ATM cells from HDLC frames using an ATM adaptation layer type 5 (AAL5) framework according to the exemplary embodiment of the invention. AAL5 is used in this exemplary embodiment because segmentation and reassembly (SAR) layer protocol overhead is kept to a minimum. In the present invention, the information octets of an HDLC frame are included in an ATM cell with overhead octets and padding octets. Padding octets are included in order that the total number of octets equals 53 octets, which the total length of an ATM cell. Each HDLC frame is mapped into an ATM cell. This operation is reversed by mapping each ATM cell into an HDLC frame.

In FIG. 4, voice HDLC frames 401 and 402 map to ATM cells 408 and 409 respectively. This mapping is applicable both to converting HDLC frames 201 to reverse voice ATM cells 202 (FIG. 2) and to converting voice HDLC frames to forward voice ATM cells 302 (FIG. 3). Similarly, ATM cells 408 and 409 conversely map to voice HDLC frames 401 and 402 respectively. This converse mapping is applicable both to converting reverse voice ATM cells 203 to voice HDLC frames 204 and to converting forward voice ATM cells 303 to voice HDLC frames 304. "Filler flags" are injected between voice HDLC frames 401 and voice HDLC frames 402 in order to maintain the transmission rate of terrestrial facilities 109 and 114. Filler flags 403 corresponds to an idle time duration for either mobile subscriber unit 101 or far-end telephone party 102. No ATM cells are generated for filler flags 403.

Parameters HDLC frame 404 maps to ATM cell 410. This mapping is applicable to converting parameters HDLC frame 207 to reverse parameters ATM cell 208 and converting parameters HDLC frame 307 to forward parameters ATM cell 308. Similarly, ATM cell 410 conversely maps to parameters HDLC frame 404. This converse mapping is applicable to converting reverse parameters ATM cell 209 to parameters HDLC frame 210 and converting forward parameters ATM cell 309 to parameters HDLC frame 310. Filler flags 405 is injected for the remainder of the DTX state; however, parameters HDLC frame 404 may be repeated periodically to update the comfort noise parameters. Voice HDLC frames 406 and 407 correspond to voice HDLC frames 213, 216, 313, and 316. ATM cells 411 and 412 correspond to voice ATM cells 214, 215, 314, and 315.

FIG. 5 illustrates the generation of ATM cells from HDLC frames using an ATM adaptation layer type 2 (AAL2) according to a further exemplary embodiment of the invention. With additional complexity, AAL2 is more efficient than AAL5 because the information octets of multiple HDLC frames may be mapped to a given ATM cell, thus eliminating the need of padding octets. Overhead octets are included in an ATM cell for segmentation and reassembly. In FIG. 5, a portion of voice HDLC frame 501 and voice HDLC frame 502 map to ATM cell 509, and voice HDLC frame 506 and a portion of voice HDLC frame 507 map to ATM cell 511. Multiple voice HDLC frames map to ATM cell 508, including the portion of voice HDLC frame 501 that is not included in ATM cell 509. Similarly, multiple voice HDLC frames map to ATM cell 512, including the portion of voice HDLC frame 507 that is not included in ATM cell 511. FIG. 5 has a similar relationship to FIGs. 2 and 3 as FIG. 4. Thus, 501, 502, 503, 504, 505, 506, 507, 508, 509, 510, 511, and 512 correspond to 401, 402, 403, 404, 405, 406, 407, 408, 409, 410, 411, and 412, respectively.

It is to be understood that the above-described embodiment is merely an illustrative principle of the invention and that many variations may be devised by those skilled in the art without departing from the scope of the invention.

## Claims

1. A terrestrial facility for transmitting packet data between a base station and a mobile switching center (MSC) in a wireless communications system, said apparatus comprising:
an asynchronous transmission network;
a first edge switch configured to receive a plurality of frames and filler flags from said MSC, to filter said filler flags and to generate forward data packets to said asynchronous transmission network only for said plurality of frames; and
a second edge switch configured to receive said forward data packets from said asynchronous transmission network, to recreate said plurality of frames from said forward data packets, to inject filler flags and to send said plurality of frames and filler flags to said base station.

2. The facility of claim 1, wherein said second edge switch is further configured to receive a plurality of frames and filler flags from said base station, to filter said filler flags and to generate reverse data packets to said asynchronous transmission network only for said plurality of frames; and
said first edge switch is further configured to receive said reverse data packets from said asynchronous transmission network, to recreate said plurality of frames from said reverse data packets, to inject filler flags and to send said plurality of frames and filler flags to said MSC.

3. The apparatus of claim 2, wherein said mobile subscriber unit utilizes a radio protocol selected from the group consisting of Telecommunications Industry Association (TIA) IS-54, TIA IS-136, TIA IS-95, Group Special Mobile (GSM) and Electronics Industry Association (EIA)/TIA-553.

4. The apparatus of claim 2, wherein said far-end telephone party utilizes a radio protocol selected from the group consisting of Telecommunications Industry Association (TIA) IS-54, TIA IS-136, TIA IS-95, GSM and Electronics Industry Association (EIA)/TIA- 553.

5. A terrestrial facility for transmitting packet data to a base station from a mobile switching center (MSC) in a wireless communications system, said apparatus comprising:
a transcoder connected to said MSC configured to detect voice and silence and to generate voice frames when said transcoder detects voice and to generate filler flags when said transcoder detects silence;
a first edge switch configured to receive said plurality of voice frames and filler flags from said transcoder, to filter said filler flags and to generate forward data packets only for said plurality of frames; and
an asynchronous transmission network configured to receive said plurality of forward data packets.

6. The apparatus of claim 5, further comprising:
a second edge switch connected to said asynchronous transmission network configured to receive said plurality of forward data packets, to recreate said plurality of frames from said forward data packets, to inject filler flags and to send said plurality of frames and filler flags; and
a base station configured to receive said plurality of frames and filler flags.

7. The apparatus of claim 5, wherein said asynchronous transmission network comprises an asynchronous transfer mode (ATM) network.

8. The apparatus of claim 5, wherein said transcoder is further configured to send a message to generate comfort noise in response to detection of silence;
said first edge switch is further configured to convert said first message into one of said forward data packets; and
said second edge switch is further configured to reconvert said one of said forward data packets into said message and to send said message through said base station.

9. The apparatus of claim 6, wherein said base station is further configured to detect voice and silence, to generate frames when voice is detected by said base station and to insert filler flags when silence is detected by said base station, and to send said frames and said filler flags to said asynchronous transmission network.

10. The apparatus of claim 6, wherein said base station is further configured to send a message to generate comfort noise in response to detection of silence;
said second edge switch is further configured to convert said first message into one of said reverse data packets; and
said first edge switch is further configured to reconvert said one of said reverse data packets into said message and to send said message through said MSC.

11. The apparatus of claim 6, wherein said mobile subscriber unit utilizes a radio protocol selected from the group consisting of Telecommunications Industry Association (TIA) IS-54, TIA IS-136, GSM and Electronics Industry Association (EIA)/TIA-553.

12. The apparatus of claim 6, wherein said far-end telephone party utilizes a radio protocol selected from the group consisting of Telecommunications Industry Association (TIA) IS-54, TIA IS-136, GSM and Electronics Industry Association (EIA)/TIA- 553.

13. A method for transmitting wireless communications between a base station and a mobile switching center (MSC), supporting a call between a mobile subscriber unit and a far-end telephone party, said MSC and said base station connected to an asynchronous transmission network by a first edge switch and a second edge switch respectively, said asynchronous transmission network transporting forward data packets and reverse data packets, said method comprising the steps of:
detecting that the far-end telephone party is idle by a transcoder, said transcoder located between said MSC and said first edge switch;
generating filler flags at said transcoder responsive to detecting that the far-end telephone party is idle;
inhibiting generation of said forward data packets to said asynchronous network by said first edge switch in response to said transcoder generating said filler flags; and
injecting said filler flags by said second edge switch responsive to said step of inhibiting by said first edge switch.

14. The method of claim 13 further comprising the steps of:
inserting filler flags to said second edge switch by said base station when said mobile subscriber is idle;
inhibiting said reverse data packets at said second edge switch to said asynchronous transmission network responsive to said filler flags; and
injecting said filler flags by said first edge switch responsive to said step of inhibiting by said second edge switch.

15. An improvement in a wireless communications system supporting a call between a mobile subscriber unit and a far-end telephone party through a base station and a mobile switching center (MSC) respectively, said MSC and said base station connected to an asynchronous transmission network through a first edge switch and a second edge switch respectively, said asynchronous transmission network transporting forward data packets and reverse data packets, said apparatus comprising:
means at a transcoder for detecting that the far-end telephone party is idle, said transcoder located between said MSC and said first edge switch;
means at said transcoder for generating filler flags on a connection to said first edge switch in response to detecting that said far-end telephone party is idle;
means at said first edge switch for inhibiting a generation of said forward data packets to said asynchronous transmission network; and
means at second edge switch for injecting said filler flags responsive to said means of inhibiting said generation of said forward data packets.

16. The improvement of claim 15 further comprising:
means at said base station for inserting filler flags on a connection to said second edge switch in response to determining that said mobile subscriber unit is idle;
means at said second edge switch for inhibiting said reverse data packets to said asynchronous transmission network; and
means at first edge switch for injecting filler flags responsive to said means of inhibiting said reverse data packets.
